# EUROPEAN PATENT APPLICATION

(11) **EP 4 723 191 A1**
(43) Date of publication of application: **08.04.2026**
(21) Application number: 25749150.6
(22) Date of filing: 23.01.2025
(51) Int. Cl.: H01M 4/13, H01M 10/42, H01M 4/62, H01M 10/052, H01M 10/48, H01M 4/02

(54) **NEGATIVE ELECTRODE HAVING IMPROVED SAFETY AGAINST INTERNAL SHORT CIRCUIT, SECONDARY BATTERY COMPRISING SAME, AND SECONDARY BATTERY SYSTEM FOR SAME**

(30) Priority: 29.01.2024 KR 20240013054
(71) Applicant: LG Energy Solution, Ltd., Seoul 07335 (KR)
(72) Inventor: LEE, Seong Kyu, Daejeon 34122 (KR); JUNG, Kyung Hwan, Daejeon 34122 (KR); YOO, Kwang Ho, Daejeon 34122 (KR); KIM, Shul Kee, Daejeon 34122 (KR)
(74) Representative: Plasseraud IP
(86) International application number: PCT/KR2025/001278
(87) International publication number: WO 2025/165063

(57) **Abstract**

The present disclosure relates to a negative electrode, a secondary battery including the same, and a secondary battery system for the same. The negative electrode can implement a predetermined volume resistance by including aluminum-containing particles of specific components and a conductive material in a coating layer. Such a negative electrode can implement appropriate insulating properties on the negative electrode surface during an internal short-circuit while allowing a predetermined current to leak, thereby preventing melt-down phenomenon and/or rapid heat generation of the secondary battery due to internal short circuits.

## Description

### [Technical Field]

The present disclosure relates to a negative electrode with improved safety against internal short circuit, a secondary battery including the same, and a secondary battery system for the same.

This application claims the benefit of priority from Korean Patent Application No. 10-2024-0013054, filed on January 29, 2024, the entire contents disclosed therein are incorporated by reference into this disclosure.

### [Background]

Lithium secondary batteries generate electric energy through oxidation and reduction reactions when lithium ions are intercalated/deintercalated at a positive electrode and a negative electrode. The lithium secondary batteries are manufactured by using materials allowing lithium ions to be reversibly intercalated and deintercalated, as active materials for the positive electrode and the negative electrode, and filling an organic electrolyte or a polymer electrolyte between the positive electrode and the negative electrode.

Such lithium secondary batteries are charged/discharged through electrochemical reactions in which ions are deintercalated/intercalated and moved between active materials of both electrodes. However, when secondary batteries are repeatedly charged/discharged, heat is generated by, for example, electrical misuse (overcharging) or other dangerous factors. When such a state is continued, the lithium secondary battery will be destroyed and exploded, causing a damage to a user, so that safety measures for the heat generation is necessary.

For example, in a conventional secondary battery, a porous separator installed between a positive electrode and a negative electrode is applied as one example of a safety measure. The porous separator realizes safety by inhibiting the electrochemical reaction by closing the pores in response to the temperature when the temperature inside the case rises above a safe temperature and blocking the movement of ions between the two electrodes (shut down phenomenon).

However, in a conventional secondary battery, when the temperature inside the battery is excessively increased beyond the temperature dissipation rate of the case due to unevenness of the separator or other causes of internal short circuit, the separator itself melts before the shutdown phenomenon occurs and loses the function of insulating the positive electrode and the negative electrode. In addition, when the positive electrode and the negative electrode are short-circuited, a chain reaction (melt down) such as decomposition of the negative electrode active material and electrolyte, decomposition of the positive electrode active material, etc. occurs, and then a thermal runaway phenomenon is reached. Such thermal runaway phenomenon not only causes the explosion of the secondary battery where the short-circuit occurred, but also induces the melt down phenomenon of the secondary battery adjacent to the secondary battery, causing further explosion.

The melt-down phenomenon is induced by the generation of an internal short-circuit by contact between the electrodes included in the secondary battery, between the electrodes and their current collector and/or between the current collectors of the electrodes. In particular, when the positive electrode current collector (or the surface of the positive electrode) is short-circuited by the contact of the negative electrode, the heat generation is rapidly increased by the resistance value of the short-circuited part and reaches a thermal runaway phenomenon in a short time, and a means for preventing, avoiding and/or responding thereto is needed to realize the battery stability.

### [Related Art Document]

### [Patent Document]

Korean Patent Laid-open Publication No. 10-2011-0067565
Korean Patent Laid-open Publication No. 10-2021-0054930

### [Summary]

### [Technical Problem]

An object of the present disclosure is to provide a lithium secondary battery related technology that can ensure battery safety in the event of an internal short-circuit of the lithium secondary battery.

### [Technical Solution]

To solve the problems described above,
the present disclosure provides a negative electrode including
a negative electrode active layer provided on at least one side of a negative electrode current collector, and including a negative electrode active material; and
a coating layer located on the negative electrode active layer,
wherein the coating layer includes aluminum-containing particles and a conductive material,
wherein the aluminum-containing particles are included in excess of 50 parts by weight with respect to the total weight of the coating layer.

In this case, the negative electrode may have a volume resistance in a range of about 1.0 × 10⁻⁴ Ω·cm or more and less than about 1.0 Ω·cm.

In addition, the aluminum-containing particles may include a metal compound represented by the following Chemical Formula 1:

[Chemical Formula 1] AlₚO_{q}(OH)ᵣ

In Chemical Formula 1,
wherein p is an integer from 1 to 10, q is an integer from 0 to 20, wherein p≤q; and
wherein r is an integer from 1 to 5.

For example, the aluminum-containing particles may include one or more of boehmite, pseudoboehmite, diaspore, akdalaite, and aluminum trihydroxide.

In addition, the aluminum-containing particles may have an average particle diameter (D₅₀) in a range of 0.1 µm to 3.0 µm.

Moreover, the conductive material may include one or more of natural graphite, artificial graphite, carbon black, acetylene black, denka black, Ketjen black, super-P, channel black, furnace black, lamp black, thermal black, graphene, and carbon nanotubes.

In addition, the conductive material may be included in an amount of 0.01 parts by weight to 5 parts by weight, based on a total of 100 parts by weight of the aluminum-containing particles.

In addition, the coating layer may further include 5 parts by weight to 15 parts by weight of a dispersant, based on the total of 100 parts by weight of the aluminum-containing particles.

Here, the dispersant may include one or more carboxylic acids.

In addition, the coating layer may further include 5 parts by weight or less of a binder, based on a total of 100 parts by weight.

The binder may include one or more of styrene butadiene rubber (SBR), polyvinylidene fluoride (PVdF), polyacrylic acid (PAA), polyalkylacrylate, polyamide (PA), and polystyrene (PS).

Further, an average thickness of the coating layer may be in a range of 1.5 µm to 20 µm, wherein a thickness ratio of the coating layer to the negative electrode active layer may be in a range of 0.05 to 0.3.

In addition, the present disclosure provides,
a secondary battery including a positive electrode; a negative electrode according to the present disclosure; and a separator disposed between the positive electrode and the negative electrode.

Furthermore, the present disclosure provides,
a secondary battery system including a plurality of cell assemblies, each including n (where n is an integer, 3≤n≤100) secondary batteries according to the present disclosure,
a charging/discharging unit electrically coupled to each of the plurality of cell assemblies for charging or discharging them individually,
a sensing unit electrically coupled to an electrode of each of the secondary batteries included in the plurality of cell assemblies to individually measure an electricity amount of one or more of an electric voltage and an electric current of the secondary battery during charging or discharging of each of the secondary batteries; and
a control part electrically coupled to the charging/discharging unit and the sensing unit to control charging or discharging of each cell assembly;
wherein the control part stops charging or discharging of the cell assembly including the corresponding secondary battery when the electricity amount measured at the sensing unit satisfies a predetermined value.

In this case, the control part can perform selecting a cell assembly having an error rate of 5% or more between the average electricity amount of the plurality of cell assemblies and the electricity amount of individual cell assemblies; determining, for the individual secondary batteries provided in the selected cell assembly, that an internal short-circuit has occurred in the secondary battery having electricity amount measured by the sensing unit is lower than an applied electricity amount of each secondary battery by about 0.5% or more; and stopping charging or discharging the cell assembly including the secondary battery determined to have an internal short circuit.

In addition, the sensing unit may further include a temperature measuring sensor for measuring the temperature of each secondary battery provided in the cell assembly.

### [Advantageous Effects]

The negative electrode according to the present disclosure can implement a predetermined volume resistance by including aluminum-containing particles of a specific component and a conductive material in the coating layer located at the outermost portion of the negative electrode. Such a negative electrode can allow a predetermined current to leak while implementing appropriate insulating properties on the negative electrode surface in the event of an internal short circuit, thereby preventing melt-down phenomenon and/or rapid heat generation of the secondary battery due to the internal short circuit.

In addition, the secondary battery system according to the present disclosure, including the secondary battery of the present disclosure described above, not only prevents a melt-down phenomenon and/or rapid heat generation in the event of an internal short circuit, but also can quickly determine an internal short-circuit through a predetermined current leaked from the secondary battery, so that the operation of the secondary battery can be preemptively controlled before a thermal runaway occurs, thereby provides the advantage of improved safety against internal short circuits.

### [Brief Description of the Drawings]

FIG. 1 is a structural diagram schematically illustrating a configuration of a secondary battery system according to the present disclosure.
FIG. 2 is a graph showing a change in voltage at a negative electrode provided in a lithium secondary battery of Comparative Example 1 and a change in temperature of a battery upon an internal short-circuit due to contact between a positive electrode current collector and a negative electrode surface.
FIG. 3 is a graph showing a change in voltage at a negative electrode provided in a lithium secondary battery of Example 1 and a change in temperature of a battery upon an internal short-circuit due to contact between a positive electrode current collector and a negative electrode surface.
FIG. 4 is a cross-sectional view illustrating a structure of an electrode assembly of a secondary battery manufactured in an experimental example for safety testing of a secondary battery according to the present disclosure.

### [Detailed Description]

The present disclosure may have various modifications and various aspects, and specific aspects will be described in detail in the following detailed description.

However, it should be understood that the present disclosure is not limited to the specific aspects, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, "electricity amount" refers to the amount of electricity flowing through an electrode during charging or discharging of a secondary battery, which can be quantified as electric current and/or electric voltage.

Furthermore, in the present specification, "average particle diameter (D₅₀)" refers to the particle diameter at which the cumulative value in the particle diameter distribution becomes 50%, and this is also called the median diameter. The average particle diameter can be measured by a method commonly applied in the art. For example, the average particle diameter can be measured using an analyzer such as a particle size analyzer or an analyzer using laser diffraction scattering particle size distribution measurement method, but is not limited thereto.

Hereinafter, the present disclosure will be described in more detail.

### Negative Electrode

The present disclosure provides a negative electrode including
a negative electrode active layer provided on at least one side of a negative electrode current collector, and including a negative electrode active material; and
a coating layer disposed on the negative electrode active layer,
wherein the coating layer includes aluminum-containing particles and a conductive material,
wherein the aluminum-containing particles are included in excess of 50 parts by weight with respect to a total of 100 parts by weight of the coating layer.

The negative electrode according to the present disclosure may be a negative electrode applied to a secondary battery (specifically, a lithium secondary battery). The negative electrode has a structure in which a negative electrode active layer including a negative electrode active material and a coating layer are sequentially stacked on a negative electrode current collector.

In this case, the negative electrode may have a predetermined volume resistance by having a coating layer including aluminum-containing particles and a conductive material on the surface of the negative electrode active layer including a carbon-based negative electrode active material. Specifically, the coating layer may have a volume resistance in a range of 1.0 × 10⁻⁴ Ω·cm or more, and more specifically in a range of 1.0 × 10⁻⁴ Ω·cm or more and less than 1.0 Ω·cm. For example, the coating layer may have a volume resistance in a range of 5.0 × 10⁻⁴ Ω·cm or less and less than1.0 Ω·cm; 1.0 × 10⁻³ Ω·cm or more and less than 1.0 Ω·cm; 3.0 × 10⁻³ Ω·cm or more and less than 1.0 Ω·cm; 1.0 × 10⁻² Ω·cm or more and less than 1.0 Ω·cm; 3.0 × 10⁻³ Ω·cm or more and less than 1.0 Ω·cm; 3.0 × 10⁻³ Ω·cm to 9.0 × 10⁻¹ Ω·cm; 5.0 × 10⁻² Ω·cm to 9.0 × 10⁻¹ Ω·cm; 6.0 × 10⁻² Ω·cm to 8.0 × 10⁻¹ Ω·⁻¹·cm; 8.0 × 10⁻² Ω·cm to 5.0 × 10⁻¹ Ω·cm; 4.0 × 10⁻² Ω·cm to 2.0 × 10⁻¹ Ω·cm; 5.0 × 10⁻² Ω·cm to 1.5 × 10⁻¹ Ω·cm; 8.0 × 10⁻² Ω·cm to 1.0 × 10⁻¹ Ω·cm; 7.0 × 10⁻² Ω·cm to 9.0 × 10⁻² Ω·cm; 7.0 × 10⁻² Ω·cm to 4.5 × 10⁻¹ Ω·cm; 7.0 × 10⁻² Ω·cm to 3.0 × 10⁻¹ Ω·cm; 8.0 × 10⁻² Ω·cm to 2.0 × 10⁻¹ Ω·Ω·cm; 1.0 × 10⁻¹ Ω·cm to 9.0 × 10⁻¹ Ω·cm; 1.0 × 10⁻¹ Ω·cm to 5.0 × 10⁻¹ Ω·cm; 2.0 × 10⁻¹ Ω·cm to 8.0 × 10⁻¹ Ω·cm; or 5.0 × 10⁻¹ Ω·cm to 1.0 Ω·cm.

In the negative electrode exceeds, when the volume resistance is more than 1.0 Ω·cm, an excessive resistance may be generated on the negative electrode surface in the event of an internal short circuit, especially an internal short-circuit due to contact between the negative electrode surface and the positive electrode current collector (and/or the positive electrode active layer), which may significantly reduce or completely stop the flow of current applied to the outside of the electrode. Accordingly, while the short-circuit current of the corresponding secondary battery is blocked, it is not easy to selectively detect and respond to the internally short-circuited secondary battery within a short time in a device including a plurality of secondary batteries, such as a battery module or pack. In addition, to respond to the occurrence of an internal short circuit, there is a problem of low economic efficiency because the cell assembly including the secondary battery where the internal short-circuit has occurred should be separated and/or removed from the secondary battery system. Moreover, when the volume resistance of the negative electrode is less than 1.0 × 10⁻⁴ Ω·cm, sufficient insulating properties are not implemented on the negative electrode surface during an internal short circuit, causing a melt-down phenomenon such as decomposition of the negative electrode active material and electrolyte, decomposition of the positive electrode active material, etc., resulting in a problem of ignition.

In other words, the negative electrode of the present disclosure has a volume resistance satisfying the above-described range, thereby assigning an appropriate resistance to the surface of the negative electrode during an internal short circuit, so that predetermined insulating properties can be implemented at the short-circuit point. Accordingly, the heat generation of the corresponding secondary battery can be significantly reduced in the event of an internal short circuit, thereby delaying the occurrence of a melt-down phenomenon. In addition, by suppressing the heat generation of the secondary battery where the internal short-circuit has occurred, additional heat generation and/or melt-down phenomenon of adjacent secondary batteries can be prevented, thereby securing time to respond to (or process) problems caused by the internal short circuit. Furthermore, there is an advantage that it is easy to respond to abnormal operation of the corresponding secondary battery, as the abnormal operation such as an internal short-circuit can be easily determined/diagnosed by allowing a significantly low amount of current (i.e., leakage current) to flow at the internal short-circuit point of the corresponding secondary battery.

The negative electrode according to the present disclosure may have its components constituting the coating layer, the content of each component, the mixing form and size of each component, the thickness ratio of the negative electrode active layer and the coating layer, etc. controlled to satisfy the volume resistance in the range described above.

Specifically, the coating layer functions as not acting as a resistance layer during normal operation of the secondary battery, preventing overvoltage during charging and discharging, and during abnormal operation such as an internal short circuit, it functions as a resistance layer preventing direct current flow between them due to contact between the negative electrode active layer and the positive electrode active layer and/or the negative electrode active layer and the positive electrode current collector, while also having a function of allowing a small amount of current to leak. For this purpose, the coating layer may have a form coated on the negative electrode active layer to cover the entire exposed surface of the negative electrode active layer, and in some cases, it may be selectively disposed only on the edge and/or end surface of the negative electrode active layer where contact with the positive electrode current collector (and/or the positive electrode active layer, etc.) is easy, or it may be selectively disposed only in the center of the negative electrode active layer that may come into contact with the positive electrode current collector (and/or the positive electrode active layer, etc.) when the separator is damaged by external force.

In addition, the coating layer may include aluminum-containing particles and conductive materials to implement a volume resistance such that current is prevented from flowing directly due to contact of the negative electrode active layer with the positive electrode active layer and/or the negative electrode active layer with the positive electrode current collector in the event of an internal short circuit, but allows a predetermined current to leak.

"Aluminum-containing particles" refer to particles that include aluminum element (Al) as a main component among metal components. Specifically, in the present disclosure, particles including a metal compound represented by the following Chemical Formula 1 are used as the aluminum-containing particles:

[Chemical Formula 1] AlₚO_{q}(OH)ᵣ

In Chemical Formula 1,
p is an integer from 1 to 10, q is an integer from 0 to 20, wherein p≤q; and
r is an integer from 1 to 5.

In general, a negative electrode having a coating layer on a negative electrode active layer has a structure that includes metal oxides such as silicon dioxide (SiO₂), aluminum oxide (Al₂O₃), titanium dioxide (TiO₂), zirconium oxide (ZrO₂) in the coating layer for the purpose of blocking current flow during an internal short circuit. However, since the above-described metal oxides have high insulating properties, the coating layer including them completely blocks current leakage to the inside and/or outside of the battery during an internal short circuit.

However, the present disclosure includes aluminum-containing particles in the coating layer in the form of particles having a crystal of aluminum oxide hydroxide as in Chemical Formula 1 with a conductive material, thereby providing insulating properties to the coating layer surface during an internal short-circuit while simultaneously allowing an extremely small amount of current to leak to the inside and/or outside of the battery. In addition, the aluminum-containing particles have the advantage of improving economic efficiency during mass production of secondary batteries due to the low manufacturing cost.

Such aluminum-containing particles may include one or more particles of boehmite (γ-AlO(OH)), pseudoboehmite (AlO(OH)), diaspore (α-AlO(OH)), akdalaite (Al₁₀O₁₄(OH)₂), and aluminum trihydroxide.

In addition, the aluminum-containing particles may have an average particle diameter (D₅₀) in a range of 0.1 µm to 3.0 µm. Specifically, the aluminum-containing particles may have an average particle diameter (D₅₀) in a range of 0.1 µm to 2.0 µm; 0.1 µm to 0.9 µm; 0.5 µm to 1.5 µm; 0.3 µm to 0.9 µm; 0.5 µm to 0.9 µm; 0.3 µm to 0.7 µm; 0.4 µm to 0.8 µm; 0.1 µm to 0.7 µm; 0.1 µm to 0.5 µm; 0.2 µm to 0.4 µm; or 0.25 µm to 0.35 µm.

When the average particle diameter (D₅₀) of the aluminum-containing particles is less than the above-described range, the dispersibility of the aluminum-containing particles is reduced, and the aluminum-containing particles may be included in the coating layer in an unevenly agglomerated form. Accordingly, there is a problem that the electrical properties of the coating layer are deteriorated. In addition, when the average particle diameter (D₅₀) of the aluminum-containing particles exceeds the above-described range, there is a limitation that the energy density of the negative electrode is reduced because it is difficult to form a thin film coating layer.

In addition, the coating layer includes a conductive material together with the aluminum-containing particles to implement a predetermined volume resistance. The conductive material may prevent high resistance from being added to the coating layer, while performing a role of improving the energy density and energy efficiency of the negative electrode during normal operation of the secondary battery.

The conductive material may include either a single type or a combination of two or more of: graphite-based materials such as natural graphite and artificial graphite; carbon black-based materials such as acetylene black, denka black, ketjen black, super-P, channel black, furnace black, lamp black, and thermal black; graphene; and carbon nanotubes.

The coating layer may control the volume resistance of the negative electrode to a predetermined range by including the aluminum-containing particles and the conductive material in predetermined contents.

Specifically, the aluminum-containing particles may be included in an amount exceeding 50 parts by weight based on a total of 100 parts by weight of the coating layer, and the conductive material may be included in an amount from 0.01 parts by weight to 5 parts by weight based on a total of 100 parts by weight of the aluminum-containing particles.

More specifically, the coating layer may include the aluminum-containing particles, based on a total of 100 parts by weight of the coating layer, in an amount of 55 parts by weight or more; 60 parts by weight or more; 70 parts by weight or more; 80 parts by weight or more; 90 parts by weight or more; 95 parts by weight or more; from 55 parts by weight to 99.99 parts by weight; from 70 parts by weight to 99.99 parts by weight; from 80 parts by weight to 99.99 parts by weight; from 90 parts by weight to 99.99 parts by weight; from 95 parts by weight to 99.99 parts by weight; or from 99 parts by weight to 99.99 parts by weight.

In addition, the conductive material may be included, based on a total of 100 parts by weight of the aluminum-containing particles, in an amount from 0.01 parts by weight to 4.5 parts by weight; from 0.01 parts by weight to 4.0 parts by weight; from 0.01 parts by weight to 3.0 parts by weight; from 0.01 parts by weight to 2.5 parts by weight; from 0.01 parts by weight to 2.0 parts by weight; from 0.01 parts by weight to 1.5 parts by weight; from 0.01 parts by weight to 1.0 parts by weight; from 0.05 parts by weight to 0.9 parts by weight; from 0.05 parts by weight to 2 parts by weight; from 0.1 parts by weight to 4 parts by weight; or from 0.05 parts by weight to 0.5 parts by weight.

The present disclosure can easily control the volume resistance of the negative electrode to a predetermined range by controlling the content to the above-described content range so that the aluminum-containing particles are included as the main component constituting the coating layer, and the conductive material is included in a small amount. In addition, by adjusting the content of the aluminum-containing particles and the conductive material to the above-described range, it is possible to prevent the electrical performance resistance of the negative electrode due to the coating layer, thereby effectively improving high temperature safety while maintaining the electrical performance of the negative electrode.

In addition, the coating layer may include a dispersant along with the aluminum-containing particles and the conductive material. The dispersant serves to uniformly disperse the aluminum-containing particles and the conductive material within the coating layer without agglomeration.

Specifically, the dispersant may include a dispersant that prevents agglomeration of particles by stabilizing the particle surface through interaction with elements contained in each of the aluminum-containing particles and the conductive material. For this, the dispersant may include one or more carboxylic acids.

For example, the dispersant may include tricarboxylic acids such as citric acid, methane tricarboxylic acid, ethane tricarboxylic acid, benzene-1,3,5-tricarboxylic acid, 5-sulfo-1,2,4-benzenetricarboxylic acid; tetracarboxylic acids such as ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid, benzene-1,2,4,5-tetracarboxylic acid; pentacarboxylic acids such as benzene-1,2,3,4,5-pentacarboxylic acid; or hexacarboxylic acids such as benzene-1,2,3,4,5,6-hexacarboxylic acid (= mellitic acid).

In addition, since the electrical properties of the coating layer are highly influenced by the aluminum-containing particles, the dispersant contained in the coating layer may be included in the coating layer in a predetermined range. Specifically, the dispersant may be included, based on a total of 100 parts by weight of the aluminum-containing particles, in an amount from 5 parts by weight to 15 parts by weight, and more specifically, may be included, based on a total of 100 parts by weight of the aluminum-containing particles, in an amount from 5 parts by weight to 12 parts by weight, from 8 parts by weight to 12 parts by weight, from 5 parts by weight to 10 parts by weight, from 10 parts by weight to 15 parts by weight, or from 9 parts by weight to 11 parts by weight.

The present disclosure can prevent agglomeration of the aluminum-containing particles due to a small amount of dispersant while preventing deterioration of the electrical properties of the coating layer due to an excessive amount of dispersant by adjusting the content of the dispersant to the above range.

Furthermore, the coating layer may further include a binder to firmly adhere the aluminum-containing particles and the conductive material. The binder is not particularly limited as long as it is applicable to the active layer of the positive electrode and/or the negative electrode, but preferably may include one or more of styrene-butadiene rubber (SBR), polyvinylidene fluoride (PVdF), polyacrylic acid (PAA), polyalkyl acrylate, polyamide (PA), and polystyrene (PS).

In this case, the binder may be included, based on a total of 100 parts by weight of the coating layer, in an amount of 5 parts by weight or less, and specifically, may be included in an amount from 0.1 parts by weight to 5 parts by weight, from 0.1 parts by weight to 4 parts by weight, from 0.1 parts by weight to 3 parts by weight, from 0.1 parts by weight to 2 parts by weight, from 0.1 parts by weight to 1 part by weight, or from 1 part by weight to 3 parts by weight.

Further, the coating layer may include the aluminum-containing particles, the conductive material, and the dispersant in a predetermined content ratio. For example, the coating layer may include, based on a total of 100 parts by weight, from 85 parts by weight to 99 parts by weight of the aluminum-containing particles; from 0.01 parts by weight to 5 parts by weight of the conductive material; and 0.99 parts by weight to 10 parts by weight or less of the dispersant.

For example, the coating layer may include, based on a total of 100 parts by weight, from 90 parts by weight to 91 parts by weight of the aluminum-containing particles; from 0.05 parts by weight to 0.15 parts by weight of the conductive material; and from 8.85 parts by weight to 9.95 parts by weight of the dispersant.

The present disclosure can include, in the negative electrode, a coating layer in which the aluminum-containing particles and the conductive material are uniformly dispersed by controlling the content ratio of each component contained in the coating layer as described above. In addition, it is possible to prevent the coating layer from being damaged during the manufacturing process of the negative electrode or the assembly process of the battery by implementing high form stability of the coating layer. Furthermore, the volume resistance of the negative electrode can be easily controlled to a predetermined range according to the present disclosure by controlling the content ratio of each component contained in the coating layer as described above.

Meanwhile, the average thickness of the coating layer may be in a range of 1.5 µm to 30 µm, and the average thickness may be larger than the average particle diameter of the aluminum-containing particles. Specifically, the average thickness of the coating layer may be in a range of 1.5 µm to 20 µm; 1.5 µm to 10 µm; 1.5 µm to 5 µm; 1.5 µm to 3 µm; 3 µm to 9 µm; 3 µm to 7 µm; 5 µm to 25 µm; 5 µm to 20 µm; 5 µm to 18 µm; 5 µm to 15 µm; 5 µm to 10 µm; 5 µm to 8 µm; 10 µm to 20 µm; 11 µm to 19 µm; 8 µm to 13 µm; 10 µm to 15 µm; 14 µm to 19 µm; 15 µm to 18 µm; 12 µm to 16 µm; or 11 µm to 14 µm. At this time, the average thickness of the coating layer can be measured in a conventional manner in the art for measuring the thickness of a thin film. The average thickness may mean an average of a plurality of arbitrary values measured in this manner, or it may mean a middle value between the largest value and the smallest value among the measured values.

In addition, the thickness ratio of the coating layer to the negative electrode active layer may be in a range of 0.05 to 0.3, and specifically, may be in a range of 0.05 to 0.2; 0.05 to 0.1; 0.05 to 0.09; 0.07 to 0.12; 0.1 to 0.2; 0.15 to 0.25; or 0.15 to 0.2.

The volume resistance of the negative electrode according to the present disclosure may be influenced by i) the volume resistance of the coating layer and ii) the thickness ratio of the negative electrode active layer and the coating layer. Here, the volume resistance of the coating layer can be controlled through the components comprising the coating layer, the content of each component, the mixing form and size of each component, etc., as described above. However, even if the volume resistance of the coating layer is controlled, when the thickness of the negative electrode active layer is excessively thicker than the coating layer and the thickness ratio of the coating layer to the negative electrode active layer is smaller than the lower limit value described above, the volume resistance of the negative electrode may decrease, resulting in significantly reduced insulating properties during an internal short circuit. In addition, when the thickness of the negative electrode active layer is equal to or smaller than the coating layer and the thickness ratio of the coating layer to the negative electrode active layer is greater than the upper limit value described above, the volume resistance of the negative electrode increases significantly. Therefore, although the short-circuit current of the secondary battery is blocked during an internal short circuit, there is a limitation that it is not easy to selectively detect and respond to the internally short-circuited secondary battery in a short time within a device including a plurality of secondary batteries, such as a battery module or pack, and the economic efficiency is low.

In other words, the present disclosure can implement high energy density of the negative electrode by adjusting the thickness ratio of the coating layer to the negative electrode active layer to the above-described range, and can minimize the volume expansion rate of the negative electrode during normal operation of the secondary battery. In addition, the negative electrode has the advantage of being able to physically protect the negative electrode surface while preventing a significant increase in resistance due to excessive thickness in the event of an internal short circuit.

Meanwhile, the negative electrode active layer included in the negative electrode includes a carbon-based negative electrode active material, and the carbon-based negative electrode active material may include a carbon-based negative electrode active material conventionally applied in the art. For example, the carbon-based negative electrode active material refers to a material having carbon atoms as the main component, and such carbon-based negative electrode active materials may include one or more of natural graphite, artificial graphite, expanded graphite, non-graphitizable carbon, carbon black, acetylene black, and ketjen black. Specifically, the carbon-based negative electrode active material may include any one or more of natural graphite and artificial graphite, but preferably may include natural graphite, or a mixture of natural graphite and artificial graphite.

In addition, the carbon-based negative electrode active material is preferably a spherical graphite aggregate formed by aggregating a plurality of flake graphite. As the flake graphite, natural graphite, artificial graphite, and others such as tar and pitch-based mesophase sintered carbon (bulk mesophase), cokes (raw coke, green coke, pitch coke, needle coke, petroleum coke, etc.) that have been graphitized can be used, and particularly it is preferable to be assembled using a plurality of highly crystalline natural graphite. In addition, one graphite aggregate may be formed by aggregating 2 to 100 pieces, preferably 3 to 20 pieces, of flake graphite pieces.

In addition, the carbon-based negative electrode active material may have an average particle diameter (D₅₀) in a range of 0.5 µm to 20 µm, and specifically, may have an average particle diameter (D₅₀) in a range of 0.5 µm to 15 µm; 0.5 µm to 10 µm; 1 µm to 15 µm; 5 µm to 20 µm; 10 µm to 20 µm; 12 µm to 18 µm; 2 µm to 7 µm; 0.5 µm to 5 µm; or 1 µm to 3 µm.

Furthermore, the negative electrode active layer may optionally further include a conductive material, a binder, and other additives, etc., as needed, along with the carbon-based negative electrode active material as the main component.

The conductive material may include one or more of carbon black, acetylene black, ketjen black, carbon nanotubes, carbon fibers, etc., but is not limited thereto.

For example, the negative electrode active layer may contain carbon black, carbon nanotubes, carbon fibers, etc. alone or in combination as the conductive material.

At this time, the content of the conductive material may be from 0.1 parts by weight to 10 parts by weight based on a total of 100 parts by weight of the negative electrode active layer, and specifically, may be from 0.1 parts by weight to 8 parts by weight, from 0.1 parts by weight, to 5 parts by weight, from 0.1 parts by weight to 3 parts by weight, from 2 parts by weight to 6 parts by weight, or from 0.5 parts by weight to 2 parts by weight. The present disclosure can prevent an increase in the resistance of the negative electrode due to a low content of conductive material, which would reduce the charge capacity, and can prevent a decrease in the charge capacity due to a decrease in the content of the negative electrode active material due to an excessive amount of conductive material, or prevent a problem of decreased rapid charging characteristics due to an increase in the loading amount of the negative electrode active layer.

In addition, the binder, as a component that helps the binding of the negative electrode active material and the conductive material and the binding to the current collector, can be appropriately applied to the extent that it does not deteriorate the electrical properties of the electrode, but specifically may include one or more of vinylidene fluoride-hexafluoropropylene copolymer (PVDF-co-HFP), polyvinylidene fluoride (PVdF), polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer, sulfonated ethylene-propylene-diene monomer, styrene butadiene rubber, and fluorine rubber.

The content of the binder may be from 0.1 parts by weight to 10 parts by weight based on a total of 100 parts by weight of the negative electrode active layer, and specifically, may be from 0.1 to 8 parts by weight, from 0.1 parts by weight to 5 parts by weight, from 0.1 parts by weight to 3 parts by weight, or from 2 parts by weight to 6 parts by weight. The present disclosure can prevent a decrease in the adhesion of the active layer due to a low content of binder or a deterioration in the electrical properties of the electrode due to an excessive amount of binder by controlling the content of the binder contained in the negative electrode active layer to the above range.

In addition, the negative electrode current collector is not particularly limited as long as it has high conductivity without causing chemical changes in the battery, and for example, copper, stainless steel, nickel, titanium, sintered carbon, etc. can be used, and in the case of copper or stainless steel, those surface-treated with carbon, nickel, titanium, silver, etc. can also be used. In addition, the average thickness of the negative electrode current collector can be appropriately applied at 1 µm to 500 µm considering the conductivity and total thickness of the manufactured negative electrode.

### Secondary Battery

In addition, the present disclosure provides,
a secondary battery including a positive electrode; a negative electrode according to the present disclosure; and a separator disposed between the positive electrode and the negative electrode.

The secondary battery according to the present disclosure may refer to a lithium secondary battery. The secondary battery includes an electrode assembly having a structure in which a separator is disposed between the positive electrode and the negative electrode of the present disclosure as described above, and has a structure in which the electrode assembly is inserted into a battery case, and then an electrolyte composition is injected and sealed.

At this time, since the negative electrode has the same configuration as the configuration of the negative electrode for the secondary battery according to the present disclosure described above, a detailed description thereof will be omitted.

In addition, the positive electrode is provided with a positive electrode mixture layer manufactured by coating, drying, and pressing a positive electrode slurry containing a positive electrode active material on a positive electrode current collector, and the positive electrode mixture layer may optionally further include a conductive material, a binder, and other additives, etc., as needed.

Here, the positive electrode active material, as a material capable of causing an electrochemical reaction on the positive electrode current collector, may include one or more lithium metal oxides represented by the following Chemical Formula 2 and Chemical Formula 3, which can reversibly intercalate and deintercalate lithium ions:

[Chemical Formula 2] LiFeₐM¹₁₋ₐXO₄

[Chemical Formula 3] Liₓ[Ni_{y}Co_{z}Mn_{w}M²ᵥ]O₂

In the above Chemical Formula 2 and Chemical Formula 3,
wherein M¹ is one or more elements of W, Cu, Fe, V, Cr, Co, Ni, Mn, Ti, Zr, Zn, Al, In, Ta, Y, La, Sr, Ga, Sc, Gd, Sm, Ca, Ce, Nb, Mg, B, and Mo,
wherein X is one or more of P, Si, S, As, and Sb,
wherein a is 0<a≤1.0,
wherein M² is one or more elements of W, Cu, Fe, V, Cr, Ti, Zr, Zn, Al, In, Ta, Y, La, Sr, Ga, Sc, Gd, Sm, Ca, Ce, Nb, Mg, B, and Mo,
wherein x, y, z, w, and v are 1.0≤x≤1.30, 0≤y<1, 0≤z≤1, 0≤w≤1, 0≤v≤0.1, respectively, where y+z+w+v=1.

The compounds represented by the above Chemical Formula 2 and Chemical Formula 3 are lithium metal oxides applied as positive electrode active materials for secondary batteries in the art. Among them, the lithium composite metal oxide represented by Chemical Formula 3 is a ternary lithium oxide with nickel (Ni), cobalt (Co), and manganese (Mn) as main components, which has the advantages of being suitable for medium- and large-sized secondary batteries for transportation field such as electric vehicles (EV) or power storage such as energy storage systems (ESS) in terms of performance such as output due to its high energy density.

At this time, the lithium metal oxide represented by Chemical Formula 3 may include LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂, etc.

The lithium composite metal oxide shows increased charge and discharge capacity as the content of nickel (Ni) increases, but it shows low chemical and structural stability, and thus it is prone to heat generation reactions, and accordingly, there is a problem that the possibility of ignition is high. In particular, the heat generation reaction can occur when a short-circuit current flows inside the battery. Accordingly, the secondary battery according to the present disclosure has the advantage of improved safety as it can suppress the heat generation reaction during an internal short-circuit due to contact between the negative electrode surface and the positive electrode current collector (and/or positive electrode active layer), while allowing a significantly small amount of current to leak, thereby preventing problems that occur continuously after an internal short circuit, by introducing a coating layer that satisfies a predetermined volume resistance into the negative electrode.

Meanwhile, the compounds represented by the above Chemical Formula 2 may include LiFePO₄, LiFe_{0.8}Mn_{0.2}PO₄, LiFe_{0.7}Mn_{0.3}PO₄,0 LiFe_{0.5}Mn_{0.5}PO₄, etc.

In addition, the positive electrode active material may be included in an amount of 85 parts by weight or more based on a total of 100 parts by weight of the positive electrode active layer, and specifically, may be included in an amount of 90 parts by weight or more, 93 parts by weight or more, or 95 parts by weight or more.

Further, the positive electrode active layer may further include a conductive material, a binder, and other additives, etc., along with the positive electrode active material.

In this case, the conductive material is used to improve the electrical performance of the positive electrode, and conventional ones used in the art can be applied, but specifically, it may include one or more of graphite-based compounds such as natural graphite and artificial graphite; carbon black such as acetylene black, denka black, ketjen black, super-P, channel black, furnace black, lamp black, and thermal black; graphene; and carbon nanotubes.

Moreover, the conductive material may be included in an amount from 0.1 parts by weight to 5 parts by weight based on a total of 100 parts by weight of each positive electrode active layer, and specifically, may be included in an amount from 0.1 parts by weight to 4 parts by weight; from 2 parts by weight to 4 parts by weight; from 1.5 parts by weight to 5 parts by weight; from 1 part by weight to 3 parts by weight; from 0.1 parts by weight to 2 parts by weight; or from 0.1 parts by weight to 1 part by weight.

In addition, the binder serves to bind the positive electrode active material, positive electrode additives, and conductive material together, and can be used without particular limitation as long as it has this function. Specifically, the binder may include one or more resins of polyvinylidene fluoride-hexafluoropropylene copolymer (PVdF-co-HFP), polyvinylidenefluoride (PVdF), polyacrylonitrile, polymethylmethacrylate, and copolymers thereof. For example, the binder may include polyvinylidenefluoride.

In addition, the binder may be included in an amount from 1 part by weight to 10 parts by weight based on a total of 100 parts by weight of each positive electrode active layer, and specifically, may be included in an amount from 2 parts by weight to 8 parts by weight; or from 1 part by weight to 5 parts by weight.

The total thickness of the positive electrode active layer is not particularly limited, but specifically, it may be in a range of 50 µm to 300 µm, and more specifically, it may be in a range of 100 µm to 200 µm; 80 µm to 150 µm; 120 µm to 170 µm; 150 µm to 300 µm; 200 µm to 300 µm; or 150 µm to 190 µm.

In addition, the positive electrode can use a material having high conductivity without causing chemical changes in the battery as the positive electrode current collector. For example, stainless steel, aluminum, nickel, titanium, sintered carbon, etc. can be used, and in the case of aluminum or stainless steel, those with a surface treatment of carbon, nickel, titanium, silver, etc. can also be used. In addition, the average thickness of the current collector can be appropriately applied in a range of 3 µm to 500 µm considering the conductivity and total thickness of the manufactured positive electrode.

Meanwhile, the separator interposed between the positive electrode and the negative electrode of each unit cell is an insulating thin film having high ion permeability and mechanical strength, and is not particularly limited as long as it is conventionally used in the art, but specifically, it can use one that includes one or more polymers of chemically resistant and hydrophobic polypropylene; polyethylene; polyethylene-propylene copolymer. The separator may have a form of a porous polymer base substrate such as a sheet or non-woven fabric including the above-mentioned polymers, and in some cases, it may have a form of a composite separator in which organic or inorganic particles are coated on the porous polymer base substrate by an organic binder. In addition, the separator may have an average pore diameter of 0.01 µm to 10 µm, and an average thickness of 5 µm to 300 µm.

Meanwhile, the secondary battery according to the present disclosure is not particularly limited, but it may be a form of secondary battery that can include a stack-type, zigzag-type, or zigzag-stack-type electrode assembly where the possibility of contact between the positive electrode current collector (and/or positive electrode active layer) and the negative electrode active layer is relatively high. For example, the secondary battery according to the present disclosure may be a pouch-type secondary battery or a prismatic secondary battery.

### Secondary Battery System

Furthermore, the present disclosure provides,
a secondary battery system including a plurality of cell assemblies, each including n (where n is an integer, 3≤n≤100) secondary batteries according to the present disclosure,
a charging/discharging unit electrically coupled to each of the plurality of cell assemblies for charging or discharging them individually,
a sensing unit electrically coupled to an electrode of each of the secondary batteries included in the plurality of cell assemblies to individually measure an electricity amount of one or more of an electric voltage and an electric current of the secondary battery during charging or discharging of each of the secondary batteries; and
a control part electrically coupled to the charging/discharging unit and the sensing unit to control charging or discharging of each cell assembly;
wherein the control part stops charging or discharging of the cell assembly including the corresponding secondary battery when the electricity amount measured at the sensing unit satisfies a predetermined value.

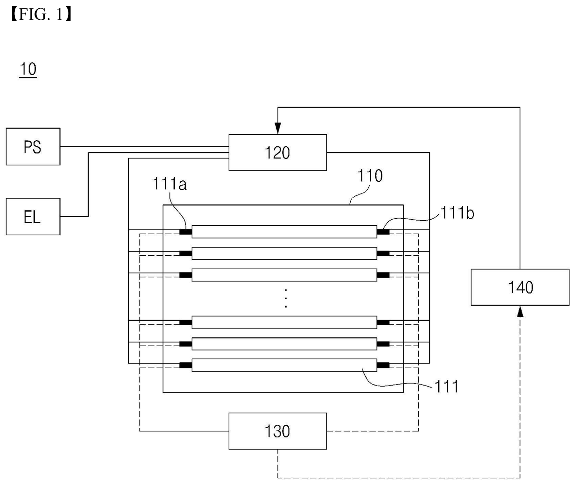

FIG. 1 is a schematic diagram illustrating a configuration of a secondary battery system according to the present disclosure. Referring to FIG. 1, the secondary battery system 10 according to the present disclosure includes: a plurality of cell assemblies 110 each including n (where n is an integer, 3≤n≤100) of the secondary batteries 111 according to the present disclosure as described above; a charging/discharging unit 120 that is electrically coupled to the plurality of cell assemblies 110 and individually charges or discharges them; a sensing unit 130 that is electrically coupled to the electrodes of each secondary battery 111 included in the plurality of cell assemblies 110 and individually measures the electric voltage and/or electric current of each secondary battery 111 during charging and discharging of the secondary battery; and a control part 140 that is electrically coupled to the charging/discharging unit 120 and the sensing unit 130 to control the charging or discharging of each cell assembly 110.

The secondary battery system 10 can determine an internal short-circuit of the secondary battery 111 by individually measuring and monitoring the electric voltage and/or electric current of the n secondary batteries 111 constituting the cell assembly 110 during charging or discharging of the secondary battery, and if an internal short-circuit is determined, it has a configuration to immediately stop only the charging or discharging of the cell assembly 110 including the corresponding secondary battery 111.

Specifically, conventional secondary battery systems have developed technologies to diagnose internal short circuits of secondary batteries by measuring temperature changes of batteries during charging and/or discharging, or through changes in the state of charge (SOC) due to self-discharge during an internal short circuit. However, when an actual internal short-circuit occurs in a secondary battery, thermal runaway progresses in a short time due to melt-down phenomenon, but these technologies have limitations in that the accuracy of diagnosis is not high, or the diagnosis process is complicated, so it takes a lot of time to recognize an internal short circuit, making it difficult to respond to thermal runaway.

However, the secondary battery system 10 according to the present disclosure includes the secondary battery 111 of the present disclosure mentioned above, and the secondary battery has a negative electrode having a coating layer having a predetermined volume resistance on the surface of the negative electrode active layer, so that when an internal short-circuit occurs due to contact between the positive electrode current collector (or positive electrode active layer) and the negative electrode surface, it can implement appropriate insulating properties on the negative electrode surface while allowing an extremely small amount of leakage current to flow through the negative electrode. Accordingly, while conventional secondary batteries have electric voltage and electric current close to 0V and 0A, respectively, due to leakage current during an internal short circuit, the secondary battery 111 according to the present disclosure has a predetermined electric current flowing with a very small amount of leakage current lost from the applied current, so it can detect and/or determine an internal short-circuit of the secondary battery 111 with high accuracy in a significantly short time using this. In addition, the secondary battery 111 can significantly reduce heat such as short-circuit heat generated due to an internal short circuit, so it can delay the occurrence of melt-down phenomenon. Furthermore, it can prevent additional heat generation and/or melt-down phenomenon of adjacent secondary batteries due to the heat of the corresponding secondary battery with an internal short circuit, so it can secure time for responding to (or processing) internal short-circuit to prevent thermal runaway of the corresponding secondary battery with an internal short circuit.

For this, the sensing unit 130 is electrically coupled to the secondary battery 111 separately from the charging/discharging unit 120, and can measure electrical properties flowing through the electrode of the secondary battery, especially the negative electrode, in real-time for each secondary battery during charging or discharging of the secondary battery 111. Here, 'electrical properties' refers to properties related to electricity flowing through the electrode of the secondary battery, especially the negative electrode, and may include electric current, electric voltage, etc. The electrical properties measured in this manner can be transmitted to the control part 140.

For example, the sensing unit 130 can individually measure one or more of the electric voltage and electric current of each secondary battery 111. The secondary battery system 10 according to the present disclosure includes the secondary battery 111 of the present disclosure in the cell assembly, so even if an internal short-circuit occurs, insulating properties is implemented on the negative electrode surface and a predetermined electric current with a small amount of leakage current is applied, so it can quickly diagnose whether each secondary battery 111 has an internal short-circuit individually through changes in one or more electricity amounts of electric current and electric voltage.

The sensing unit 130 may include means conventionally applied in the art to measure the electrical properties flowing through each secondary battery 111. For example, the sensing unit 130 may include a current measuring sensor for measuring electric current or a voltage measuring sensor for measuring electric voltage, etc.

In addition, the sensing unit 130 may further include a temperature measuring sensor (not shown) inside the cell assembly 110 to measure the temperature of each secondary battery 111 provided in the cell assembly 110. The electric current of the secondary battery may increase when the temperature of the secondary battery increases. Such a temperature increase of the secondary battery can occur due to an overload caused by fluctuations in the load connected to the system; insertion or opening of transformers, condensers; or excessive current flowing in the operation of an electric motor or a motor. The sensing unit 130 may further include a temperature measuring sensor that measures the temperature of each secondary battery 111 in order to reflect changes in electric current due to such a temperature rise of the secondary battery other than the internal short-circuit of the secondary battery, and accordingly, can lower the error rate when determining an internal short circuit.

Further, the control part 140 is electrically coupled to the charging/discharging unit 120 and the sensing unit 130, respectively. Through this, the control part 140 monitors the electrical properties of each secondary battery 111 in real-time during charging and/or discharging of each cell assembly 110, individually detects and/or determines an internal short-circuit of the secondary battery 111 through changes in electrical properties, and controls the charging or discharging of the cell assembly 110 including the corresponding secondary battery 111 where an internal short-circuit has occurred.

For example, the control part 140 monitors the electrical properties of each secondary battery 111 transmitted in real-time from the sensing unit 130, determines whether the amount of change satisfies a predetermined value if there is a change in the transmitted electrical properties; and if it satisfies the predetermined value, individually controls the charging or discharging of the cell assembly 110 including the corresponding secondary battery 111 through the charging/discharging unit 120.

Specifically, the control part 140 first receives individual electricity amounts for all secondary batteries 111 included in the secondary battery system 10 from the sensing unit 130, and from the received individual electricity amounts of the secondary batteries 111, it can calculate the electricity amount of each cell assembly 110 containing them and the average value of the electricity amounts of the plurality of cell assemblies 110, that is, the average electricity amount (A) of the cell assemblies 110. Here, the electricity amount may refer to the electric voltage and/or electric current, and may reflect a correction value according to the temperature of each secondary battery measured by the temperature measurement sensor of the sensing unit 130. In addition, the average electricity amount (A) of the plurality of cell assemblies 110 may be the average electricity amount of all cell assemblies included in the secondary battery system, and in some cases, it may be the average electricity amount of a part of the total cell assemblies.

The calculated average electricity amount (A) of the cell assemblies 110 can be compared individually with the electricity amount of each cell assembly 110 to primarily select cell assemblies 110 with an error rate of 5% or more, specifically 7% or more; 10% or more; 5% to 20%; or 5% to 15%. The primary selection refers to the process of selecting a cell assembly that includes a secondary battery recognized as having a problem among all secondary batteries. The primary selection can shorten the time required to monitor the preset applied electricity amount and the electricity amount of individual secondary batteries during charging and discharging for all secondary batteries, thus providing immediacy in determining an internal short-circuit of the secondary battery system.

In addition, n secondary batteries included in each cell assembly may have voltage differences between cells during charging and discharging. Such voltage differences between cells can occur due to the manufacturing process of each secondary battery or external factors. Since voltage differences between cells can affect the capacity and lifespan of the secondary battery and cause overcharging and/or over-discharging of individual secondary batteries, cell balancing can be performed to prevent this. Cell balancing can be performed by applying a micro-current to the circuit structure applied to the secondary battery system, in which case it can induce a deviation in the electricity amount between secondary batteries, so the accuracy of internal short-circuit determination can be further increased by setting the error rate between the average electricity amount (A) and the electricity amount of each secondary battery to 5% or more.

Next, the control part 140 can determine an internal short-circuit of the corresponding secondary battery when the electricity amount of an individual secondary battery is 0.5% or more lower than the preset applied electricity amount during charging or discharging of the secondary battery 111 included in the primarily selected cell assembly 110.

Generally, when an internal short-circuit occurs in a secondary battery, leakage current is generated at the short-circuit point, so the electric current and electric voltage measured may be close to 0A and 0V, respectively. However, the secondary battery system according to the present disclosure can not only implement a predetermined insulating properties on the negative electrode surface during an internal short-circuit due to the coating layer of the negative electrode equipped in the secondary battery, but also allow a predetermined current to flow. Since the current is lost with a very small amount of current leaked at the internal short-circuit point from the applied current, it may be lower than the preset applied current amount for charging or discharging the secondary battery. Such a deviation between the preset applied current amount and the electric current amount may be 0.5% or more of the preset applied current amount, and specifically, may be 0.5% or more; 1% or more; 2% or more; 3% or more; 5% or more; 10% or more; 15% or more; 20% or more; 30% or more; 50% or more; 70% or more; 5% to 90%; 5% to 50%; 10% to 30%; 50% to 90%; 0.5% to 20%; 0.5% to 10%; 0.5% to 5%; 0.5% to 3%; 5% to 10%; or 0.5% to 20%.

The control part 140 can send a charging or discharging stop signal to the charging/discharging unit 120 to stop the charging or discharging of the cell assembly 110 including the corresponding secondary battery 111 in order to stop the charging or discharging of the corresponding secondary battery 111 determined to have an internal short circuit. When the charging/discharging unit 120 receives a charging or discharging stop signal from the control part 140, it can selectively stop the charging or discharging of the cell assembly 110 including the corresponding secondary battery 111. The present disclosure can not only reduce the response time compared to responding to an internal short-circuit at the secondary battery level by controlling charging or discharging in cell assembly units when an internal short-circuit occurs in the secondary battery, but also increases maintenance efficiency during normal use of the secondary battery system.

Meanwhile, the cell assembly 110 may include two or more of the secondary batteries 111 of the present disclosure, and specifically, may include 2 to 100; 2 to 50; 2 to 30; 5 to 20; 3 to 5; 5 to 20; or 10 to 20 secondary batteries 111.

The plurality of secondary batteries 111 may be electrically connected in series, in parallel, or in a series-parallel mixed form.

For example, n secondary batteries may be connected in parallel and mounted inside the cell assembly. The secondary battery system according to the present disclosure controls charging/discharging in cell assembly units during an internal short circuit, but in this manner, when n secondary batteries provided inside the cell assembly are electrically connected in parallel, there is an advantage that the charging/discharging of the corresponding secondary battery with an internal short-circuit among the n secondary batteries can be additionally controlled individually.

When an internal short-circuit occurs in any secondary battery, there is an advantage that the charging or discharging of each secondary battery can be controlled.

In addition, the cell assembly 110 may be a battery module or a battery bank depending on the number of secondary batteries included therein, and/or the form and/or type of housing containing them. In addition, when it includes a plurality of such cell assemblies 110, it may refer to a battery pack or an energy storage system.

In addition, the charging/discharging unit 120 has a function of individually electrically coupling with the plurality of cell assemblies 110 to charge or discharge each cell assembly 110, and for this purpose, it can be electrically coupled respectively with an external power source PS for charging the cell assembly 110 and an electric load EL for using the power stored in the cell assembly 110.

Here, the external power source PS and the electric load EL are not particularly limited in type as long as they are conventionally applied to products to which the secondary battery system 10 is applied.

For example, the external power source PS, as a means capable of supplying constant current or constant voltage charging power to each of the cell assemblies 110, may include a charging station for an electric vehicle (EV) when the secondary battery system 10 is applied to the electric vehicle (EV), and in some cases, it may include a separate power source or auxiliary battery included inside the electric vehicle (EV).

In addition, the electric load EL, as a means for discharging the secondary batteries 111 provided in the cell assembly 110 by using the power stored in the cell assembly 110, may be an inverter and an electric motor, etc. applied to the electric vehicle (EV) when the secondary battery system 10 is applied to the electric vehicle (EV). The inverter can perform the function of converting direct current provided from the cell assembly 110 included in the secondary battery system 10 into alternating current, and the electric motor can be driven using the alternating power provided from the inverter.

Furthermore, the secondary battery system 10 according to the present disclosure may further include an input/output part (not shown) for input charging and discharging conditions to the control part 140 and for the user to check the results determined by the control part 140.

The secondary battery system 10 can change the applied voltage or applied current conditions during charging and/or discharging depending on the type of electric load EL electrically coupled to the charging/discharging unit 120 or the usage environment. In order to input these changed charging/discharging conditions to the control part 140, the input/output part may include user input means conventionally applied in the art such as a keyboard, mouse, barcode recognizer, voice recognizer, touch screen, etc., but is not limited thereto.

In addition, the input/output part, when the control part 140 determines that an internal short-circuit has occurred in the cell assembly 110, may include output means conventionally applied in the art such as a monitor, touch screen, and other display devices, audio output devices, etc., to inform the user of whether an internal short-circuit has occurred; the time of occurrence; the location of the corresponding secondary battery 111 and/or the corresponding cell assembly 110 determined to have an internal short circuit, but is not limited thereto.

Furthermore, the secondary battery system 10 according to the present disclosure has excellent safety against internal short circuits due to the above-described configuration, so it can be usefully applied to medium- and large-sized devices that require high energy density and high safety against internal short circuits as a power source. Specific examples of such medium- and large-sized devices include power tools that move by receiving power from an electric motor; electric vehicles including electric vehicles (EV), hybrid electric vehicles (HEV), plug-in hybrid electric vehicles (PHEV); electric two-wheelers including electric bicycles (E-bike), electric scooters (E-scooter); electric golf carts; energy storage systems (ESS), and more specifically, hybrid electric vehicles (HEV), but are not limited thereto.

Meanwhile, electronic or electrical devices and/or any other related devices or components described in this specification may be implemented using any suitable hardware, firmware (e.g., application-specific integrated circuit), software, or a combination of software, firmware, and hardware. For example, various components of these devices may be formed on a single integrated circuit (IC) chip or on separate IC chips. In addition, various components of these devices may be implemented on a flexible printed circuit film, tape carrier package (TCP), printed circuit board (PCB), or on a single base substrate. Electrical connections or interconnections described in this specification may be implemented, for example, by wiring or conductive elements on a PCB or other type of circuit carrier. Conductive elements may include, for example, metallizations such as surface metallizations, and/or pins, and may include conductive polymers or ceramics. In addition, electrical energy may be transmitted through wireless connections, for example, using electromagnetic radiation or light.

In addition, various components of these devices may be processes or threads that execute on one or more processors to perform various functions described herein, execute in one or more computing devices, execute computer program instructions, and interact with other system components. Computer program instructions are stored in memory that can be implemented in a computing device using, for example, standard memory devices such as random access memory (RAM). Computer program instructions may also be stored on other non-transitory computer-readable media such as CD-ROMs, flash drives, etc.

In addition, those skilled in the art should recognize that the functions of various computing devices may be combined or integrated into a single computing device, or the functions of a particular computing device may be distributed across one or more other computing devices without departing from the scope of the exemplary aspects of the present disclosure.

The secondary battery system according to the present disclosure has the above-described configuration, so it can apply a predetermined electric current during an internal short circuit, allowing it to proactively control charging and/or discharging before thermal runaway occurs in the corresponding secondary battery where the short-circuit has occurred. In addition, it can prevent additional melt-down phenomenon and/or thermal runaway occurring in adjacent secondary batteries, so it can be usefully applied to battery modules or battery packs, etc. where a plurality of secondary batteries is applied.

The present disclosure will be described in more detail through the following examples and experimental examples.

However, the following examples and experimental examples are only illustrative of the present disclosure, and the content of the present disclosure is not limited to the following examples and experimental examples.

### Examples 1 to 8 and Comparative Examples 1 to 3. Manufacturing Secondary Battery

### Manufacturing of Positive Electrode

LiNi_{0.8}Co_{0.1}Mn_{0.1}O₂ with a particle size of 5 µm was prepared as a positive electrode active material, and mixed with carbon-based material and polyvinylidenefluoride as a binder in a weight ratio of 94:3:3 in N-methyl pyrrolidone (NMP) to form a slurry, which was cast on an aluminum thin plate, dried in a vacuum oven at 120°C, and then rolled to manufacture a positive electrode.

### Manufacturing of Negative Electrode

Mixed graphite, prepared by mixing natural graphite (average particle diameter: 10±1 µm) and artificial graphite (average particle diameter: 8±1 µm) in a weight ratio of 2:8, was prepared as a negative electrode active material, and carbon black as a conductive material and carboxymethylcellulose (CMC) and styrene butadiene rubber (SBR) as binders were prepared. Then, a negative electrode slurry was manufactured by mixing 95 parts by weight of mixed graphite, 1 part by weight of carbon black, 1.5 parts by weight of carboxymethylcellulose (CMC), and 2.5 parts by weight of styrene butadiene rubber (SBR) with water to become 50% solid content.

Separately, metal-containing particles and citric acid as a dispersant were added to water and mixed for 10 minutes for dispersion. Then, Super-P (product name: super C-65) as a conductive material was added to the prepared dispersion and mixed for 20 minutes to 30 minutes to prepare a coating slurry. At this time, ① the type, ② the average particle diameter (D₅₀), and ③ the content based on a total of 100 parts by weight of the coating layer of the metal-containing particles included in the coating slurry, and ④ the content of the conductive material and ⑤ the content of the dispersant based on a total of 100 parts by weight of the metal-containing particles were adjusted as shown in Table 1 below.

When the negative electrode slurry and the coating slurry were each prepared, each slurry was simultaneously cast on a copper thin plate (thickness: 10 µm) being roll-to-roll transferred (transfer rate: 5 m/min) using a dual die coater. At this time, the negative electrode slurry and the coating slurry were cast to have average thicknesses of 100 µm to 200 µm and 10 µm to 20 µm, respectively, along the transfer direction of the copper thin plate. The copper thin plate on which each slurry was simultaneously cast was dried in a vacuum oven at 120°C and then rolled to manufacture a negative electrode (thickness ratio of the coating layer to the negative electrode active layer: about 0.17). ⑥ The volume resistance of the manufactured negative electrode was measured. The volume resistance was measured using a volume resistance meter (model number: XF057) equipped with 46 probes. Specifically, a constant current was applied with 46 probes in contact with the surface of the negative electrode active layer to measure the potential distribution occurring on the surface at multiple points. Subsequently, the volume resistance of the negative electrode was calculated by performing inverse analysis of the potential distribution by the finite volume method for the total thickness of the negative electrode active layer and the coating layer and the measured potential values. The measured results are shown in Table 1.

### Manufacturing of Lithium Secondary Battery

A separator made of 18 µm polypropylene was placed between the previously prepared positive electrode and negative electrode, inserted into a pouch-type case, and then an electrolyte composition was injected to assemble a 1Ah-class lithium secondary battery.

**[Table 1]**

| | Metal-containing particles | | | Content based on metal-containing particles | | ⑥ Volume resistance of negative electrode [Ω·cm] |
|---|---|---|---|---|---|---|
| | ① Type | ② D₅₀ | ③ Content based on 100 parts by weight of coating layer [parts by weight] | ④ Conductive material [parts by weight] | ⑤ Dispersant [parts by weight] | |
| Example 1 | Boehmite | 300±100 nm | 90.8 | 0.1 | 10 | 8.284×10⁻² |
| Example 2 | Boehmite | 300±100 nm | 88.5 | 3 | 10 | 5.816×10⁻¹ |
| Example 3 | Boehmite | 300±100 nm | 83.3 | 10 | 10 | 1.137×10⁻⁵ |
| Example 4 | Boehmite | 300±100 nm | 98.9 | 0.1 | 1 | 5.169×10⁻² |
| Example 5 | Boehmite | 300±100 nm | 83.3 | 0.1 | 20 | 3.253×10⁻¹ |
| Example 6 | Boehmite | 50±10 nm | 90.8 | 0.1 | 10 | 3.382×10⁻² |
| Example 7 | Boehmite | 4±0.5µm | 90.8 | 0.1 | 10 | 6.927×10⁻¹ |
| Example 8 | Al₂O₃ | 300±100 nm | 90.8 | 0.1 | 10 | > 1 |
| Comparative Example 1 | Boehmite | 300±100 nm | 90.9 | 0 | 10 | > 1 |
| Comparative Example 2 | Si | 300±100 nm | 90.8 | 0.1 | 10 | 7.418×10⁻⁵ |
| Comparative Example 3 | SiO₂ | 300±100 nm | 90.8 | 0.1 | 10 | > 1 |

### Example 9. Manufacturing of Secondary Battery

A lithium secondary battery was manufactured by performing the same method as in Example 1, except that the negative electrode active layer and the coating layer were formed so that the thickness ratio of the coating layer (average thickness: 1.5 µm) to the negative electrode active layer was about 0.02 during negative electrode manufacturing. At this time, the volume resistance of the negative electrode was 2.816 × 10⁻⁵ Ω·cm.

### Examples 10 to 18 and Comparative Examples 4 to 6. Manufacturing of Secondary Battery System

A secondary battery system with a configuration as shown in FIG. 1 was manufactured using the lithium secondary batteries manufactured in Examples 1 to 9 and Comparative Examples 1 to 3.

Specifically, 10 lithium secondary batteries manufactured in Examples 1 to 9 and Comparative Examples 1 to 3 were prepared respectively, and after arranging 5 of each prepared lithium secondary battery in the thickness direction of the battery and fixing them, 2 cell assemblies 110 were manufactured. The charging/discharging unit 120 and the sensing unit 130 were electrically connected in parallel individually to the positive electrode 111a and the negative electrode 111b of each lithium secondary battery provided in the cell assembly. Here, the charging/discharging unit 120 was equipped with separate ports so that an external power source PS and an electric load EL could be electrically connected. The sensing unit 130 was equipped with a current measuring sensor for measuring the electric current of the negative electrode 111b and a temperature measuring sensor for measuring the surface temperature of each lithium secondary battery.

In addition, the charging/discharging unit 120 and the sensing unit 130 were each electrically connected to the control part 140, and the control part 140 was equipped with a touch screen to input voltage and current conditions during charging and/or discharging of each lithium secondary battery provided in the cell assembly 110, and to output whether an internal short-circuit occurred during charging and discharging; the time of internal short-circuit occurrence; the location of the corresponding lithium secondary battery 111 determined to have an internal short-circuit among the lithium secondary batteries of the cell assembly.

The external power source PS and the electric load EL were connected to each port of the charging/discharging unit 120, and the charging and discharging of the cell assembly was performed. It was confirmed that during the charging and discharging of the cell assembly, the sensing unit 130 measured the electric current flowing through the negative electrode of each lithium secondary battery and the surface temperature of the lithium secondary battery in real-time and transmitted them to the control part 140. Subsequently, an internal short-circuit of the corresponding lithium secondary battery 111 was induced by pressing the surface of an arbitrary lithium secondary battery 111 among the plurality of lithium secondary batteries 111 provided in the cell assembly 110.

When an internal short-circuit occurred in the lithium secondary battery 111, the sensing unit 130 measured the electric current and surface temperature of each lithium secondary battery provided in the cell assembly 110 and transmitted the measured electric current value and the surface temperature of the lithium secondary battery to the control part 140. The control part 140 calculated the average value of each electric current received and obtained an average electric current value (A) by reflecting the correction value according to the temperature of each lithium secondary battery measured.

The control part 140 primarily selected lithium secondary batteries with an error rate of 5% to 10% by comparing the calculated average electric current value (A) with the transmitted electric current value of each lithium secondary battery, and diagnosed that an internal short-circuit had occurred in a lithium secondary battery where the electric current amount was 0.5 to 5% lower than the preset applied current during charging or discharging of the selected lithium secondary battery. In addition, the control part 140 sent an electrical signal to the charging/discharging unit 120 to stop the charging/discharging of the cell assembly 110 including the lithium secondary battery diagnosed as having an internal short circuit, and accordingly, the charging/discharging of the corresponding cell assembly 110 was stopped. In this regard, in the lithium secondary battery system of the examples, the charging/discharging of the cell assembly was stopped before ignition of the corresponding lithium secondary battery occurred, but in the lithium secondary battery system of the comparative examples, ignition of the corresponding lithium secondary battery occurred before the charging/discharging of the cell assembly was stopped.

Subsequently, the control part 140 transmitted to the input/output part whether an internal short-circuit occurred during charging and discharging; the time of internal short-circuit occurrence; the location of the corresponding lithium secondary battery 111 determined to have an internal short-circuit among the lithium secondary batteries of the cell assembly, and the input/output part displayed the transmitted information on the touch screen.

### Experimental Example 1

The following experiment was performed to evaluate the performance of the secondary battery system according to the present disclosure during an internal short circuit.

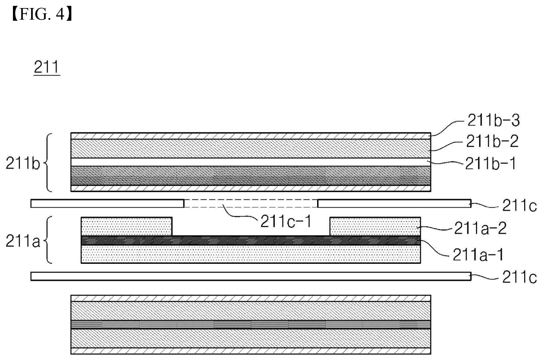

Specifically, experimental 1Ah-class pouch-type lithium secondary batteries (N/P ratio = about 1.07) were manufactured by performing the same method as in Examples 1 to 9 and Comparative Examples 1 to 3, except for using a separator with a hollow central portion 211c-1 in the center as shown in FIG. 4, and using a positive electrode without a positive electrode active layer formed in the center so that the positive electrode current collector 211a-1 and the negative electrode active layer 211b-2 were in contact at the hollow central portion of the separator.

Each manufactured lithium secondary battery was fully charged, and after inducing an internal short-circuit by pressing the center of the pouch-type lithium secondary battery at 1MPa, the electric voltage of the lithium secondary battery and the surface temperature of the lithium secondary battery were measured for 100 seconds. This internal short-circuit induction experiment was repeated a total of 3 times.

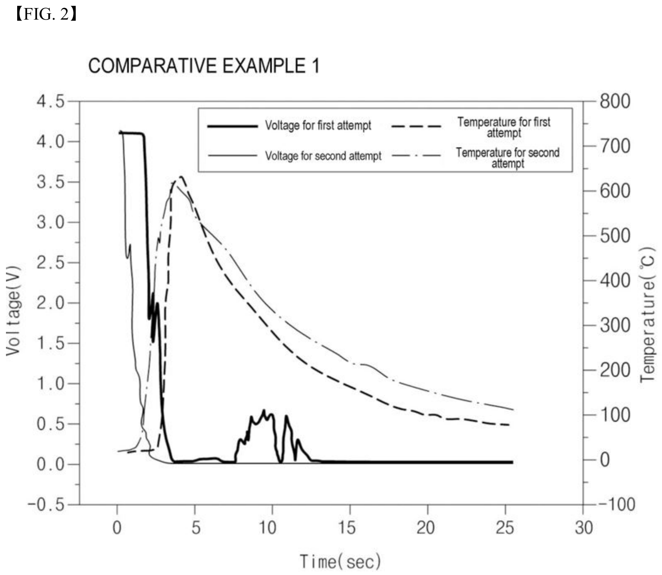

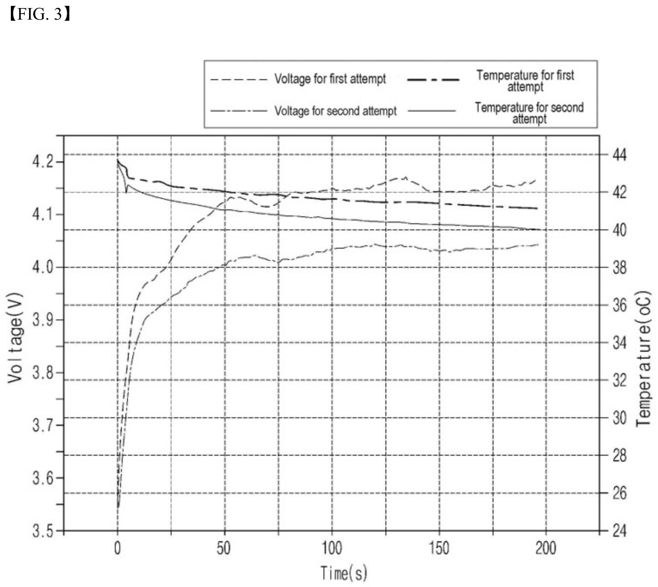

The electric voltage of the lithium secondary battery and the surface temperature of the lithium secondary battery were measured at the point 100 seconds after the internal short circuit, and the average values were calculated, and whether the lithium secondary battery ignited after the internal short-circuit induction and the time it took for the battery temperature to reach its peak were confirmed. The results are shown in Table 2 below. In addition, the voltage and temperature changes according to elapsed time for Comparative Example 1 and Example 1 are shown in FIGS. 2 and 3, respectively.

Separately, a lithium secondary battery system was manufactured as in Example 10 using a cell assembly that included one experimental 1Ah-class pouch-type lithium secondary battery manufactured earlier and 9 pouch-type lithium secondary batteries manufactured in Examples 1 to 9 and Comparative Examples 1 to 3, respectively. While performing charging and discharging of the manufactured lithium secondary battery system, an internal short-circuit of the experimental lithium secondary battery was induced. At this time, the applied voltage during charging and discharging of the system was adjusted to 4.2V.

Then, whether the lithium secondary battery system diagnosed the internal short-circuit of the experimental lithium secondary battery and whether it confirmed the location of the lithium secondary battery where the internal short-circuit occurred were confirmed. The results are shown in Table 2 below.

**[Table 2]**

| | Internal short-circuit induction test of lithium secondary battery | | | | Whether system determines internal short circuit |
|---|---|---|---|---|---|
| | Average electric voltage [V] | Average temperature | Time required to reach highest temperature | Ignition or not | |
| Example 1 | 4.10±0.05 | 39~42°C | Over 60 seconds | No ignition | O |
| Example 2 | 3.70±0.10 | 45~50°C | Over 60 seconds | No ignition | O |
| Example3 | 0 | 570~610°C | About 20 seconds | Ignition | O |
| Example 4 | 3.90±0.10 | 30~50°C | Over 60 seconds | No ignition | O |
| Example 5 | 4.00±0.10 | 30~45°C | Over 60 seconds | No ignition | O |
| Example 6 | 3.80±0.10 | 30~50°C | About 60 seconds | No ignition | O |
| Example 7 | 3.50±0.10 | 40~55°C | About 45 seconds | No ignition | O |
| Example8 | 4.21±0.05 | 23~25°C | - | No ignition | × |
| Example 9 | 0 | 550~580°C | About 10 seconds | Ignition | × |
| Comparative Example 1 | 4.21±0.05 | 23~25°C | - | No ignition | × |
| Comparative Example 2 | 0 | 640~645°C | About 5 seconds | Ignition | × |
| Comparative Example3 | 4.21±0.05 | 25~27°C | - | No ignition | × |

As shown in Table 2 and FIGS. 2 and 3, the lithium secondary batteries of the examples according to the present disclosure were found to have insulating properties implemented during an internal short-circuit of the lithium secondary battery while simultaneously inducing a small amount of leakage current, resulting in an electric voltage that is lower than the applied voltage of 4.2V but 3.0V or more. In addition, it was confirmed that the lithium secondary batteries of the examples maintained a battery temperature of 60°C or less due to significantly low leakage current. Further, it was confirmed that the lithium secondary battery system including these lithium secondary batteries could diagnose whether an internal short-circuit occurred in the lithium secondary battery using the small amount of leakage current applied after the internal short circuit, and could also accurately determine its location.

In contrast, the lithium secondary batteries of the comparative examples with significantly low volume resistance of the coating layer were found to have rapidly increasing temperature within a few seconds and ignited during an internal short circuit. In addition, due to such rapid thermal runaway, it was confirmed that the lithium secondary battery system including the lithium secondary batteries of the comparative examples could not determine whether an internal short-circuit occurred in the battery.

In addition, the lithium secondary batteries of the comparative examples with a volume resistance of the coating layer exceeding 1 Ω·cm were confirmed to be completely insulated, with no current leakage or temperature increase due to an internal short circuit. Moreover, the lithium secondary battery system including these lithium secondary batteries of the comparative examples was shown to be unable to determine i) whether an internal short-circuit occurred in the battery and ii) the location of the lithium secondary battery with an internal short circuit.

From these results, it can be seen that the negative electrode according to the present disclosure can implement a predetermined volume resistance by including aluminum-containing particles of specific components and conductive materials in a predetermined content ratio. In addition, it can be seen that the secondary battery including the same can prevent melt-down phenomenon and/or rapid heat generation of the secondary battery due to an internal short-circuit and gain time to respond to the internal short-circuit because it can implement appropriate insulating properties on the negative electrode surface while allowing a predetermined current to leak during an internal short circuit.

Moreover, it can be seen that the secondary battery system including the secondary battery can determine whether an internal short-circuit has occurred in the secondary battery and the location of the lithium secondary battery with an internal short-circuit with high accuracy and promptness using the electric current applied during an internal short circuit.

While the present disclosure has been described with reference to preferred aspects thereof, it will be understood by those skilled in the art that various modifications and variations can be made therein without departing from the technical scope of the present disclosure as defined by the appended claims.

Therefore, the scope of the present disclosure should not be limited by the detailed description of the specification but should be determined by the appended claims.

### [Description of Reference Numerals]

10: lithium secondary battery system
110: cell assembly
111: lithium secondary battery
111a: positive electrode of lithium secondary battery
111b: negative electrode of lithium secondary battery
112a: positive electrode terminal
112b: negative electrode terminal
120: charging/discharging unit
130: sensing unit
140: control part
PS: external power source
EL: electric load
211: lithium secondary battery for experiments
211a-1: positive electrode current collector
211a-2: positive electrode active layer
211b-1: negative electrode current collector
211b-2: negative electrode active layer
211b-3: negative electrode coating layer
211c: separator
211c-1: hollow central portion of separator

## Claims

1. A negative electrode, comprising:
a negative electrode current collector;
a negative electrode active layer provided on at least one side of the negative electrode current collector, wherein the negative electrode active layer comprises a negative electrode active material; and
a coating layer located on the negative electrode active layer,
wherein the coating layer comprises aluminum-containing particles and a conductive material,
wherein the aluminum-containing particles are included in excess of 50 parts by weight with respect to a total of 100 parts by weight of the coating layer.

2. The negative electrode of claim 1, wherein the negative electrode has a volume resistance in a range of 1.0 × 10⁻⁴ Ω·cm or more and less than 1.0 Ω·cm.

3. The negative electrode of claim 1, wherein the aluminum-containing particles comprise a metal compound represented by the following Chemical Formula 1:
[Chemical Formula 1] AlₚO_{q}(OH)ᵣ
wherein p is an integer ranging from 1 to 10, q is an integer ranging from 0 to 20, wherein p≤q, and
wherein r is an integer ranging from 1 to 5.

4. The negative electrode of claim 1, wherein the aluminum-containing particles comprise one or more of boehmite, pseudoboehmite, diaspore, akdalaite, or aluminum trihydroxide.

5. The negative electrode of claim 1, wherein the aluminum-containing particles have an average particle diameter (D₅₀) in a range of 0.1 µm to 3.0 µm.

6. The negative electrode of claim 1, wherein the conductive material comprises one or more of natural graphite, artificial graphite, carbon black, acetylene black, denka black, Ketjen black, super-P, channel black, furnace black, lamp black, thermal black, graphene, or carbon nanotubes.

7. The negative electrode of claim 1, wherein the conductive material is included in an amount of 0.01 parts by weight to 5 parts by weight, based on a total of 100 parts by weight of the aluminum-containing particles.

8. The negative electrode of claim 1, wherein the coating layer further comprises 5 parts by weight to 15 parts by weight of a dispersant, based on a total of 100 parts by weight of the aluminum-containing particles.

9. The negative electrode of claim 8, wherein the dispersant comprises one or more carboxylic acids.

10. The negative electrode of claim 1, wherein the coating layer further comprises 5 parts by weight or less of a binder, based on a total of 100 parts by weight of the coating layer.

11. The negative electrode of claim 10, wherein the binder comprises one or more of styrene butadiene rubber (SBR), polyvinylidene fluoride (PVdF), polyacrylic acid (PAA), polyalkylacrylate, polyamide (PA), or polystyrene (PS).

12. The negative electrode of claim 1, wherein an average thickness of the coating layer is in a range of 1.5 µm to 20 µm, and
wherein a thickness ratio of the coating layer to the negative electrode active layer is in a range of 0.05 to 0.3.

13. A secondary battery, comprising:
a positive electrode;
the negative electrode according to claim 1; and
a separator disposed between the positive electrode and the negative electrode.

14. A secondary battery system, comprising:
a plurality of cell assemblies, each comprising n of the secondary battery according to claim 13,
a charging/discharging unit electrically coupled to each of the plurality of cell assemblies for charging or discharging them individually,
a sensing unit electrically coupled to an electrode of each secondary battery included in the plurality of cell assemblies to individually measure an electricity amount of one or more of an electric voltage and an electric current of each secondary battery during charging or discharging of each secondary battery; and
a control part electrically coupled to the charging/discharging unit and the sensing unit to control charging or discharging of each of the cell assembly;
wherein the control part is configured to stop charging or discharging of the cell assembly comprising a corresponding secondary battery when the electricity amount measured at the sensing unit satisfies a predetermined value, and
wherein n is an integer and 3≤n≤100.

15. The secondary battery system of claim 14, wherein the control part is configured to:
select a cell assembly having an error rate of 5% or more between an average electricity amount of the plurality of cell assemblies and an electricity amount of individual cell assemblies;
determine for each individual secondary battery provided in the selected cell assembly, that an internal short-circuit has occurred in a secondary battery having an electricity amount measured by the sensing unit lower than an applied electricity amount of each secondary battery by about 0.5% or more; and
stop charging or discharging of the cell assembly comprising the secondary battery determined to have an internal short circuit.

16. The secondary battery system of claim 14, wherein the sensing unit further comprises a temperature measuring sensor for measuring a temperature of each secondary battery provided in the cell assembly.
